# EUROPEAN PATENT APPLICATION

(11) **EP 4 455 370 A1**
(43) Date of publication of application: **30.10.2024**
(21) Application number: 23766770.4
(22) Date of filing: 06.03.2023
(51) Int. Cl.: C25B 11/04, B01J 23/46, C01B 3/04, C25B 1/04, C25B 9/00, C25B 9/23

(54) **WATER ELECTROLYSIS CATALYST MADE FROM IRIDIUM OXIDE POWDER, WATER ELECTROLYSIS ELECTRODE MEMBRANE, AND MEMBRANE WITH CATALYST LAYER**

(30) Priority: 10.03.2022 JP 2022037596
(71) Applicant: Tanaka Kikinzoku Kogyo K.K., Tokyo 100-6422 (JP)
(72) Inventor: ARIMA, Ikkei, Hiratsuka-shi, Kanagawa 254-0021 (JP); KONAKA, Saki, Ichikawa-shi, Chiba 272-0013 (JP); FUJITA, Mitsuharu, Hiratsuka-shi, Kanagawa 254-0021 (JP)
(74) Representative: Weickmann & Weickmann PartmbB
(86) International application number: PCT/JP2023/008221
(87) International publication number: WO 2023/171594

(57) **Abstract**

The present invention discloses a water electrolysis catalyst suitable for a polymer electrolyte water electrolysis apparatus, and an anode electrode membrane using the catalyst. The water electrolysis catalyst of the present invention is a water electrolysis catalyst containing iridium oxide in a powder form. The iridium oxide powder contains an amorphous iridium oxide powder, and an average particle size of the powder is 0.01 µm or more and 30 µm or less. The water electrolysis catalyst containing the iridium oxide powder of the present invention contains amorphous iridium oxide, shows a specific property in TG-DTA, and exhibits an exothermic peak in a region of 300°C to 450°C in the TG-DTA.

## Description

### BACKGROUND OF THE INVENTION

### FIELD OF THE INVENTION

The present invention relates to a water electrolysis catalyst for generating hydrogen by electrolyzing water, an electrode membrane for water electrolysis containing the catalyst, and a membrane with a catalyst layer. More particularly, the invention relates to a water electrolysis catalyst containing an iridium oxide powder.

### DESCRIPTION OF THE RELATED ART

Due to environmental problems and energy problems increasing in these years, use of hydrogen has been expected as a renewable novel energy. For example, a hydrogen engine driven by directly using hydrogen as a fuel, a fuel cell for generating electricity by using hydrogen as a fuel, and the like have been developed and put to practical use.

In order to effectively use hydrogen as an energy source, it is necessary to stably and safely perform the production and supply. The production of hydrogen has been conventionally performed by steam reforming or the like of a fossil fuel, but from the viewpoint of environmental problems and problems of depletion of fossil fuels, significance of hydrogen generation process by water electrolysis has been increasing. The hydrogen generation process by water electrolysis is roughly divided into three, that is, alkaline water electrolysis, polymer electrolyte water electrolysis, and steam electrolysis. Among these, the polymer electrolyte water electrolysis is being expected to be developed in the future because hydrogen can be highly efficiently produced as compared with the alkaline water electrolysis and the like.

In the polymer electrolyte water electrolysis, an electrolysis cell (single cell) obtained by sandwiching a polymer electrolyte membrane (PEM) used as an electrolyte between an anode/cathode electrode and a power supply body is constructed, and a water electrolysis apparatus obtained by stacking a plurality of electrolysis cells is used. As the polymer electrolyte membrane, a proton conductive fluororesin-based ion exchange membrane (a perfluorocarbon sulfonic acid membrane) is used in many cases. Besides, a catalyst layer containing a water electrolysis catalyst is used as the anode and cathode electrodes. In recent years, a membrane with a catalyst layer (CCM) in which an electrode membrane containing a mixture of a water electrolysis catalyst particle and a solid electrolyte (ionomer) is formed on an electrolyte membrane is used as a main member of a water electrolysis apparatus.

The present invention relates to a water electrolysis catalyst suitable for an anode electrode membrane used in a water electrolysis apparatus. Here, as a conventional water electrolysis catalyst, a precious metal catalyst in which a precious metal is supported on an inorganic oxide is known. An example includes a catalyst in which iridium oxide or ruthenium oxide is supported on a tin oxide carrier used as the inorganic oxide.

### Prior Art Document

### Patent Document

Patent Document 1: Japanese Patent No. 5199575
Patent Document 2: Japanese Translation of PCT International Application Publication No. 2020-500692

### SUMMARY OF THE INVENTION

### Technical Problem

Efficiency of hydrogen production with a water electrolysis apparatus largely depends, of course, on the performance of an electrode membrane. In this regard, an anode electrode membrane is required to be highly active, have a low oxygen overvoltage, and have a favorable voltage effect. Besides, the anode electrode membrane is also required to have durability. This is because a polymer electrolyte membrane corresponding to an electrolyte is a strongly acidic resin membrane containing sulfonic acid or the like, and hence the anode to which water is supplied is exposed to a severe corrosive environment.

Also in the conventional water electrolysis catalyst described above, reduction of the oxygen overvoltage and ensuring of the durability are considered. This does not, however, sufficiently cope with the required properties described above, and there still is a room of improvement. Besides, the performance of an electrode membrane should be evaluated in the form of an electrode, and is not based on only the performance of a catalyst. Even a highly active catalyst is difficult to exhibit its performance depending on the configuration of the electrode membrane. Specifically, for improving efficiency of hydrogen production with a polymer electrolyte water electrolysis apparatus, examinations should be comprehensively made from both the sides of a water electrolysis catalyst and an electrode configuration.

As described above, hydrogen is an energy highly expected as a renewable energy, and is expected to be used not only in a fuel cell but also in use as a raw material of a synthetic natural gas or the like, and in industrial use in petroleum processing/steel plants. Hydrogen is suitable for storage and transportation, and surplus power of the hydrogen production by water electrolysis can be effectively used. Therefore, the water electrolysis technology is one of most promising technologies among large-scale power storage technologies. For putting the water electrolysis technology to practical use, comprehensive examinations are necessary. The present invention has been made under these backgrounds, and reveals a water electrolysis catalyst suitable for an anode electrode membrane used in a polymer electrolyte water electrolysis apparatus, and the configuration of an electrode membrane capable of causing the catalyst to effectively function.

### Solution to Problem

As is understood from the conventional techniques (Patent Documents 1 and 2), it is known that iridium oxide has activity as a water electrolysis catalyst. Iridium oxide is useful as an electrode catalyst because it is a conductive precious metal oxide, and in addition, is physically/chemically stable. The conventional water electrolysis catalyst described above is in the form of a supported catalyst in which a precious metal such as iridium oxide is supported on an inorganic oxide carrier.

On the contrary to the conventional techniques, the present inventors have first decided to use a powder of iridium oxide as a water electrolysis catalyst for optimizing the form of the water electrolysis catalyst. In the present invention, the catalyst is constituted only by an iridium oxide powder differently from these supported catalysts in order to impart high conductivity to the water electrolysis catalyst. The water electrolysis catalyst is a material for constituting an electrode (anode) together with an ionomer, and hence is originally required to be conductive. In the conventional water electrolysis catalyst that is a supported catalyst, the inorganic oxide used as the carrier is poor in conductivity, and therefore, the conductivity of the catalyst itself is low. The present inventors have decided to constitute the water electrolysis catalyst only by the iridium oxide powder for retaining the conductivity.

Besides, the present inventors have considered that it is not preferable that the iridium oxide powder is mixed/doped with another metal/precious metal in consideration of the use environment of the water electrolysis catalyst. For example, ruthenium oxide added to iridium oxide in the water electrolysis catalyst of Patent Document 1 has a low oxygen overvoltage but is inferior in durability to iridium oxide. The ruthenium oxide is ionized and detached during the electrolysis, and can be a cause of degradation of the durability of the entire catalyst. Not only ruthenium oxide but also any added metal affects the durability. Therefore, the present inventors have presumed that a water electrolysis catalyst should be constituted only by an iridium oxide powder to which any element is intentionally added.

Here, as the iridium oxide powder, crystalline iridium oxides having a rutile structure produced by various methods are known. Also according to a preliminary confirmation test performed by the present inventors, it has been confirmed that a crystalline iridium oxide powder exhibits catalytic activity in water electrolysis. Then, the present inventors have made earnest studies considering that an iridium oxide powder capable of exhibiting higher activity can be obtained by adjusting a production method and the like. As a result, it has been found that a powder of amorphous iridium oxide exhibits higher catalytic activity, and thus, the present invention has been accomplished.

Specifically, the present invention relates to a water electrolysis catalyst containing an iridium oxide powder, in which the iridium oxide powder contains an amorphous iridium oxide powder, and has an average particle size of 0.01 µm or more and 30 µm or less. Now, a configuration and a production method of the water electrolysis catalyst of the present invention, and an electrode membrane for water electrolysis suitably using this water electrolysis catalyst will be described.

### (A) Water Electrolysis Catalyst of Invention, and Production Method thereof

As described above, the water electrolysis catalyst of the present invention contains an iridium oxide powder. This water electrolysis catalyst at least partially contains an amorphous iridium oxide powder. In other words, the water electrolysis catalyst of the present invention contains only amorphous iridium oxide, or contains a mixture of amorphous iridium oxide and crystalline iridium oxide (rutile type IrO₂).

According to the examination made by the present inventors, amorphous iridium oxide has a lower oxygen overvoltage and exhibits higher activity than crystalline iridium oxide. The reason is not exactly clear, and the present inventors have considered that the activity is improved because the electronic state is changed by oxygen deficiency or crystal structure distortion that an amorphous iridium oxide powder probably has.

The water electrolysis catalyst of the present invention may be entirely constituted by an amorphous iridium oxide powder, or may partially contain crystalline iridium oxide. This is because a crystalline iridium oxide powder also has activity in a water electrolysis reaction. The proportion of the amorphous iridium oxide in the catalyst is preferably 15% by mass or more based on the mass of the entire catalyst. When the proportion of the amorphous iridium oxide powder is less than 15% by mass in terms of mass ratio, the activity is substantially the same as that of a catalyst containing only crystalline iridium oxide. The proportion of the amorphous iridium oxide powder is more preferably 20% by mass or more, and further preferably 30% by mass or more in terms of mass ratio. In addition, it is particularly preferable that the entire catalyst is the amorphous iridium oxide (100% by mass).

The water electrolysis catalyst containing the iridium oxide powder of the present invention exhibits, due to the amorphous iridium oxide indispensably contained therein, a specific behavior in a thermal analysis method or a crystallographic analysis method. An example of the thermal analysis method includes thermogravimetric differential thermal analysis (TG-DTA). The TG-DTA is an analysis method in which while a sample and a reference substance are being heated, a weight change (TG) of the sample, and a temperature difference (differential heat) between the sample and the reference substance are measured. The water electrolysis catalyst of the present invention exhibits an exothermic peak in the region of 300°C to 450°C in the TG-DTA. This exothermic peak is exhibited because the amorphous iridium oxide changes to crystalline (rutile) iridium oxide by heating. Since a usual crystalline iridium oxide powder does not show such an exothermic peak, the exothermic peak in TG-DTA is particularly useful for specifying the water electrolysis catalyst of the present invention.

Besides, the water electrolysis catalyst of the present invention can be specified also by X-ray diffraction analysis (XRD) well known as the crystallographic analysis method. In an XRD pattern of the water electrolysis catalyst of the present invention, the amorphous iridium oxide shows a broad peak. A diffraction peak position of amorphous iridium oxide is different from that of crystalline iridium oxide, and is observed at at least any one angle of 20 = 22°, 34°, and 58°. The water electrolysis catalyst of the present invention may, however, contain also a crystalline iridium oxide powder, and in this case, the diffraction pattern of the crystalline iridium oxide is also observed. Therefore, it is sometimes difficult to distinguish the diffraction peak of the amorphous iridium oxide because of superimposition with the diffraction peak of the crystalline iridium oxide. In this regard, the exothermic peak in the region of 300°C to 450°C in TG-DTA can be observed even when the catalyst also contains a crystalline iridium oxide powder, and hence is convenient for specifying the water electrolysis catalyst of the present invention.

The water electrolysis catalyst of the present invention contains only the amorphous iridium oxide, or only amorphous and crystalline iridium oxides, and the iridium oxide preferably has a high purity. In particular, it is preferable that prescribed impurity elements are reduced. Here, examples of impurity elements to be particularly restricted include Na, Cl, and Fe.

It is preferable that the water electrolysis catalyst of the present invention has a Na content of 100 ppm or less, and a Cl content of 100 ppm or less. For promoting a water splitting reaction in water electrolysis, since a proton generated in the anode efficiently conducts in the electrode membrane, a catalyst contained in the electrode membrane needs to have proton conductivity. Na contained in the iridium oxide powder is cationized at the time of electrolysis, and can be a factor of reducing the proton conductivity. Besides, Cl is preferably restricted because it promotes degradation of components and members of devices and cells. Accordingly, in the present invention, the Na and Cl contents in the iridium oxide powder are preferably restricted to fall in the above-described range.

Besides, Fe is an impurity liable to accelerate radical generation during water electrolysis. The thus generated radical attacks a sulfonic acid portion of a polymer electrolyte membrane to cause an Unzipping reaction, which affects the durability of the polymer electrolyte membrane. Therefore, in the water electrolysis catalyst of the present invention, the Fe content is preferably 100 ppm or less.

In addition to these impurities, examples of incidental impurity elements include Ni, Cu, Al, Mn, and Zn. A total content of these is preferably 100 ppm or less.

In the water electrolysis catalyst of the present invention, the amorphous iridium oxide powder indispensably contained therein can contain water (crystal water). In the amorphous iridium oxide, the intermolecular bond is loose, and hence crystal water may be captured therein. Such crystal water is not an impurity in considering that the target to be processed by the water electrolysis catalyst is water. Besides, the content needs not be particularly regulated. In addition, any amorphous iridium oxide does not always contain crystal water.

Besides, when the water electrolysis catalyst of the present invention contains the amorphous iridium oxide, the proportion can be estimated by TG-DTA or Ir concentration analysis employing a calibration curve method together. As described above, the amorphous iridium oxide indispensably contained in the water electrolysis catalyst of the present invention exhibits an exothermic peak in the region of 300°C to 450°C in the TG-DTA. This peak intensity increases/decreases in accordance with the proportion of the amorphous iridium oxide in the water electrolysis catalyst. Therefore, the TG-DTA is precedently performed on both a catalyst containing only amorphous iridium oxide and a catalyst not containing amorphous iridium oxide (a catalyst containing only crystalline iridium oxide), and the peak intensity of the exothermic peak of the catalyst containing only amorphous iridium oxide is measured, and thus, a calibration curve can be created. Besides, in this case, when one or more water electrolysis catalysts each having a known proportion of the amorphous iridium oxide are prepared, and the intensity of the exothermic peak is measured, the accuracy of the calibration curve can be increased. Then, in the TG-DTA of a water electrolysis catalyst to be measured, the proportion of the amorphous iridium oxide can be estimated based on the presence and intensity of an exothermic peak in the region of 300°C to 450°C.

Besides, the proportion of the amorphous iridium oxide in the water electrolysis catalyst can be estimated also based on the Ir concentration. As described above, the amorphous iridium oxide powder applied in the present invention tends to contain water (crystal water). Due to this water contained therein, the water electrolysis catalyst containing the amorphous iridium oxide powder tends to have an Ir concentration slightly lower than that in a water electrolysis catalyst containing a crystalline iridium oxide powder. Therefore, when Ir concentrations in both a catalyst containing only amorphous iridium oxide and a catalyst not containing amorphous iridium oxide are measured, a calibration curve can be created based on the concentrations. Also in this case, when the Ir concentration in a water electrolysis catalyst having a known proportion of the amorphous iridium oxide is measured for complement, the accuracy of the calibration curve can be increased. When the calibration curve based on the Ir concentration is used, the proportion of the amorphous iridium oxide in a water electrolysis catalyst to be measured can be estimated. In considering the influence of crystal water as described above, the Ir concentration in the water electrolysis catalyst containing the amorphous iridium oxide of the present invention is preferably 70% by mass or more and 85% by mass or less. Besides, the Ir concentration varies depending on the content of amorphous iridium oxide containing crystal water, and hence, the Ir concentration is more preferably 82% by mass or less, and further preferably 80% by mass or less.

The iridium oxide powder contained in the water electrolysis catalyst of the present invention has an average particle size of 0.01 µm or more and 30 µm or less. When the particle size is less than 0.01 µm, the catalyst may be degraded because Ir elutes during the use, and when the particle size is over 100 µm, the activity may be degraded due to reduction of a reaction area, or the proton conductivity and continuity in a catalyst layer may be affected. This average particle size corresponds to an average (volume average particle size (Mv)) based on the volume of particles of the iridium oxide powder contained in the water electrolysis catalyst. Also when an amorphous iridium oxide powder and a crystalline iridium oxide powder are mixed, the average particle size is calculated using all the iridium oxide powders as a target.

For the measurement of the average particle size of the iridium oxide powder contained in the water electrolysis catalyst, various commercially available particle size/particle size distribution measurement devices can be used. For example, a laser diffraction/scattering particle size distribution measurement device can measure the particle size of the iridium oxide powder by a dry method. Alternatively, particle sizes of a plurality of iridium oxide powders may be measured based on an observation image obtained with an electron microscope (SEM or TEM) so as to obtain an average thereof.

The iridium oxide powder has a specific surface area of, preferably 5 m²/g or more and 200 m²/g or less. The specific surface area of the iridium oxide powder can be measured by a gas adsorption method or the like.

Next, a method for producing the iridium oxide powder contained in the water electrolysis catalyst of the present invention will be described. The water electrolysis catalyst of the present invention wholly or partially contains the amorphous iridium oxide powder, and hence it is necessary to produce the amorphous iridium oxide powder. In this regard, some methods for producing a crystalline rutile iridium oxide powder are known. An example of a method for producing a crystalline iridium oxide powder includes an ADAMS method having been long known as a method for producing a precious metal oxide particle. In the method for producing an iridium oxide powder by the ADAMS method, a solution obtained by adding a nitric acid salt (such as NaNO₃) to an iridium chloride solution is evaporated to dryness, heat is absorbed from the resultant to generate/remove NO₂ gas, and the resultant is further heated at 500°C or more, and thus iridium oxide can be obtained. Another example of a method for producing an iridium oxide powder includes a precipitation method through a hydroxide of iridium. In the precipitation method, a solution of an iridium compound such as an iridium chloride is used as a raw material, and the solution is neutralized with an alkali to precipitate a hydroxide (Ir(OH)₄ or the like). Thereafter, the iridium hydroxide is dehydrated and burned, and thus, an iridium oxide powder can be obtained.

The present inventors have found, referring to the method for producing a crystalline iridium oxide powder, a method for producing an amorphous iridium oxide powder. In this method, an iridium hydroxide is generated in the same manner as in the precipitation method, and thereafter, the temperature is controlled to obtain an amorphous iridium oxide powder. Now, this method for producing an amorphous iridium oxide powder will be described.

As the iridium compound used as a raw material, iridium chloride (IrCl₃), hydrogen hexachloroiridate (IV) (H₂IrCl₆), iridium nitrate (Ir(NO₃)₃), iridium sulfate ((Ir₂(SO₄)₃), or the like is applied. An alkali is added to an aqueous solution of such an iridium compound to generate an iridium hydroxide. The alkali added here is not especially limited. The temperature of a reaction system in the neutralization with the alkali is preferably 60°C or more and 95°C or less. When the temperature is less than 60°C, the neutralization reaction proceeds slowly, and a nuclear is produced slowly, and hence the resultant particle may be coarse. Besides, when the temperature is over 95°C, the solution is boiled, and hence stable nucleation is difficult to occur, and in addition, the concentration is changed due to evaporation, and hence a stable neutralization reaction is difficult to proceed.

The iridium hydroxide generated/precipitated through the neutralization reaction is collected, and is then dehydrate and dried, and thus, an iridium oxide powder can be obtained. Here, it is preferable to adjust the drying temperature to 40°C or more and 300°C or less for obtaining an amorphous iridium oxide powder. When the temperature is lower than 40°C, the drying time is very long. When the drying is performed at a temperature over 300°C, the amorphous iridium oxide may be crystallized although partially. A more preferable drying temperature is 50°C or more and 90°C or less. The drying time is adjusted in accordance with the drying temperature, and is preferably 1 hour or more and 30 hours or less. Through this drying treatment, an amorphous iridium oxide powder can be obtained, and there is no need to perform a burning treatment at a high temperature thereafter. This is because the powder becomes crystalline by the burning treatment. It is noted that the iridium hydroxide collected before the drying is preferably washed. This is for removing unwanted impurity elements such as Na and Cl. The washing can be performed with an appropriate combination of pure water and an acid (such as nitric acid).

The amorphous iridium oxide powder obtained by the above-described production method can be used as the water electrolysis catalyst. Alternatively, the amorphous iridium oxide powder thus produced may be mixed with a crystalline iridium oxide powder to obtain the water electrolysis catalyst. In this case, a crystalline iridium oxide powder obtained by the production method such as the ADAMS method may be mixed, or a commercially available crystalline iridium oxide powder may be obtained for use.

The water electrolysis catalyst containing a crystalline iridium oxide powder can be produced not only by the mixing method described above but also by a heat treatment of an amorphous iridium oxide powder. As described above, an amorphous iridium oxide powder is changed to a crystalline iridium oxide by heating. Therefore, when the amorphous iridium oxide powder is burned to be partially changed to be crystalline, an iridium oxide powder in a mixed state can be obtained. This burning is performed preferably at 300°C or more and 1040°C or less. When the temperature is lower than 300°C, the structural change from amorphous to crystalline does not occur. Besides, when the temperature is over 1040°C, the iridium oxide powder may be changed to an iridium metal. When the water electrolysis catalyst containing amorphous and crystalline iridium oxide powders is to be obtained by thus burning an amorphous iridium oxide powder, the mixing ratio can be adjusted in accordance with the treatment time. The treatment time depends on the burning temperature.

### (B) Electrode Membrane for Water Electrolysis and Membrane with a catalyst layer (CCM) of Invention

Next, an electrode membrane for water electrolysis of the present invention, and a membrane with a catalyst layer (CCM) including the same will be described. The electrode membrane for water electrolysis of the present invention is a mixture of the water electrolysis catalyst described above and an ionomer.

An electrode membrane used in an anode of a water electrolysis apparatus is required to have proton conductivity for rapidly transferring a proton (H⁺) generated by water electrolysis to a polymer electrolyte membrane. Besides, the electrode membrane is essentially required to be electrically conductive. An ionomer of the electrode membrane for water electrolysis is a proton conductor as well as an insulator (resistor). The water electrolysis catalyst containing the iridium oxide powder of the present invention is a conductor, but does not have proton conductivity. Accordingly, when a mixing amount of the ionomer is increased, the proton conductivity is improved, but the electric conductivity is reduced, and a mixing amount of the catalyst has a reverse tendency.

The present inventors have found, in consideration of the contradictory relationship in the mixing amounts (mixing ratio) of the catalyst and the ionomer, a suitable configuration as an electrode membrane to which the water electrolysis catalyst (iridium oxide powder) of the present invention is applied. Specifically, the mixing ratio per unit area between the water electrolysis catalyst and the ionomer is, in terms of a ratio of the mass of iridium (mg/cm²) and the mass of the ionomer (mg/cm²), preferably 2:1 or more and 5:1 or less in terms of iridium:ionomer. When this mixing ratio is employed, the oxygen overvoltage of the resultant anode electrode membrane can be reduced, and the electrode membrane can be excellent in voltage efficiency.

The water electrolysis catalyst contained in the electrode membrane for water electrolysis of the present invention is the same as that described above. On the other hand, examples of the ionomer to be mixed with the catalyst include fluororesin-based cation exchange resins having a sulfone group, a carboxyl group, or a phosphonic group. These are known under a trade name of Nafion(R), among which dispersion solution-type products can be suitably used. The concentration of the dispersion solution is generally 5% by mass to 20% by mass, and these dispersion solutions are commercially available.

The thickness of the electrode membrane for water electrolysis of the present invention is preferably 2 µm or more and 10 µm or less. A thin electrode membrane of 2 µm or less is difficult to form, and even when it can be formed, the durability is poor. On the other hand, when the thickness of the electrode membrane is increased, although the number of active sites is increased due to increase of the content of the water electrolysis catalyst and increase of the porosity, the proton conductivity is reduced. In consideration of balance between the active sites and the proton conductivity, the thickness of the electrode membrane is set preferably to the above-described range.

The electrode membrane for water electrolysis of the present invention is useful as an anode electrode of a CCM used in a water electrolysis apparatus. As described below, the electrode membrane is formed by applying, onto a polymer electrolyte membrane, a mixture containing the water electrolysis catalyst.

In the CCM of the water electrolysis apparatus, a cathode electrode membrane is formed in addition to the anode electrode membrane. The cathode electrode membrane is a mixture of a hydrogen evolution catalyst and an ionomer. As the hydrogen evolution catalyst, a platinum-supported carbon catalyst (Pt/C catalyst) or the like is applied. In the present invention, however, the configuration and the thickness of the cathode electrode membrane are not especially limited.

In the CCM of the present invention, an electric capacity per iridium-coated unit area (Ir_{1mg}·cm⁻²) of the electrode membrane of the present invention used as the anode is preferably 0.50 C or more. Increase of the electric capacity improves voltage efficiency of water electrolysis using the CCM. The water electrolysis catalyst containing the iridium oxide powder of the present invention has a large specific surface area, and suitable conductivity and proton conductivity, and hence, when this is applied, the electric capacity of the electrode membrane can be improved to the above-described range.

The material of the polymer electrolyte membrane of the CCM of the present invention is the same as that of the conventional techniques, and is not especially limited. As the polymer electrolyte membrane, fluororesin-based cation exchange resins having a sulfone group, a carboxyl group, or a phosphonic group having the same composition as the ionomer of the electrode membrane are known. These are known under a trade name of Nafion(R), and Model Nos. 112, 115, 117, 450 and the like can be suitably used. The thickness of the polymer electrolyte membrane is preferably small because of an overvoltage generated by resistance of the membrane, and on the other hand, the thickness of the polymer electrolyte membrane is preferably large in consideration of cross leakage. In consideration of balance therebetween, the thickness of the polymer electrolyte membrane is preferably 10 µm or more and 200 µm or less, and more preferably 50 µm or more and 150 µm or less.

The CCM of the present invention constitutes one unit of an electrolytic cell together with a member such as a power supply body. As the power supply body, a structure having conductivity, and capable of circulation of a vapor liquid is used. For example, a powder sintered body of a metal such as Ti, Ta, or stainless steel, an expanded metal, a metal mesh, a porous body (sponge metal), or the like is used.

The electrode membrane for water electrolysis of the present invention can be produced by using, as a substrate, a polymer electrolyte membrane working as an electrolytic cell, and applying a mixture (sometimes referred to as an ink, a paste, a slurry or the like) of the water electrolysis catalyst and the ionomer to the substrate. As a dispersion medium of the mixture, water, 1-propanol, or the like is applied. Besides, when the solution type Nafion liquid is used, a dispersion medium thereof works as the dispersion medium of the mixture. An ionomer for an electrode membrane is available in the state of a dispersion solution, and the mixture can be produced by adding the iridium oxide powder thereto. A method for applying the mixture is not especially limited. The substrate may be dipped in the mixture, or a drop method, a spray method or the like may be employed.

After applying the mixture, a heat treatment is performed to form an electrode membrane. The heating temperature here is preferably 100°C or more and 130°C or less. Besides, at the same time of the heating, a pressure may be applied to form the electrode membrane and pressure-bond the membrane to the substrate. A pressing force applied here is preferably 100 kgf/cm² or less based on the coating area. When an excessive pressing force is applied, pores in the electrode membrane are collapsed, and the number of active sites in the catalyst is reduced. The pressing force is more preferably 10 kgf/cm² to 75 kgf/cm². As a process for simultaneously performing the pressing and heating, hot pressing is employed.

The production of the electrode membrane of the present invention can be performed, during the production of the CCM, simultaneously with production of the cathode electrode membrane. The cathode electrode membrane is also produced by application of a mixture of the hydrogen evolution catalyst, and pressure-bonding thereof. On the respective surfaces of the polymer electrolyte membrane used as the substrate, the mixtures to be formed into the anode electrode membrane and the cathode electrode membrane are applied, and the resultants are simultaneously subjected to hot pressing, and thus, the CCM is produced.

### Advantageous Effects of Invention

As described so far, the present invention relates to a water electrolysis catalyst suitable for an anode electrode membrane used in a polymer electrolyte water electrolysis apparatus. An iridium oxide powder of the present invention is excellent in proton conductivity with activity in water electrolysis retained. In an electrode membrane containing this iridium oxide powder, when the mixing ratio of the catalyst is appropriately set, an oxygen overvoltage in water electrolysis is reduced, and voltage efficiency is excellent. The present invention is useful not only in a hydrogen generation device employing polymer electrolyte water electrolysis but also in an alkaline ionized water apparatus or the like.

### BRIEF DESCRIPTION OF THE DRAWINGS

Fig. 1 is a diagram illustrating an XRD pattern of a water electrolysis catalyst containing an amorphous iridium oxide powder produced in First Embodiment;
Fig. 2 is a diagram illustrating a TG-DTA curve of the amorphous water electrolysis catalyst (iridium oxide powder) produced in First Embodiment;
Fig. 3 is a graph illustrating an I-V characteristic curve, in water electrolysis, of a CCM produced in First Embodiment;
Fig. 4 is a graph illustrating a CV curve, in water electrolysis, of the CCM produced in First Embodiment;
Fig. 5 is a graph illustrating an I-V characteristic curve, in water electrolysis, of CCMs having different catalyst mixing ratios produced in Second Embodiment;
Fig. 6 is a diagram illustrating DTA curves of water electrolysis catalysts containing an iridium oxide powder having different contents of amorphous iridium oxide produced in Third Embodiment;
Fig. 7 is a graph illustrating the relationship between the content of amorphous iridium oxide and DTA at an exothermic peak intensity;
Fig. 8 is a graph illustrating the relationship between the content of amorphous iridium oxide and an Ir concentration; and
Fig. 9 is a graph illustrating the relationship, in a CCM produced in Third Embodiment, between the content of an amorphous iridium oxide powder and a cell voltage.

### DETAILED DESCRIPTION OF THE PREFERRED EMBODIMENTS

First Embodiment: An embodiment of the present invention will now be described. In the present embodiment, an amorphous iridium oxide powder was produced by a precipitation method, and this was used as a water electrolysis catalyst to produce a CCM. Then, the electrolytic property thereof was evaluated.

### [Production of Amorphous Iridium Oxide Powder]

An aqueous solution of a raw material of iridium chloride (concentration: 100 g/L) was prepared, and the aqueous solution was added to a NaOH solution kept at 90°C for neutralization. As a result, a precipitate of an iridium hydroxide was generated/precipitated. The precipitate was collected by vacuum filtration, and washed with pure water and nitric acid at 60°C. Thereafter, the hydride was dried at 60°C for 22 hours. In this manner, an amorphous iridium oxide powder was produced.

The thus produced iridium oxide powder was analyzed by ICP, and it was confirmed that both Na and Cl contents were 100 ppm or less. It was also confirmed that a total content of Fe, Cu, Al, Mg, Cr, and Mn was also less than 100 ppm. The iridium oxide powder was measured for a particle size with a laser diffraction/scattering particle size distribution measuring device (Horiba Ltd.: LA950), and was found to have an average particle size of 4.2 µm.

Next, the amorphous iridium oxide powder produced as above was subjected to XRD and TG-DTA. In the XRD, a diffraction pattern was measured with an XRD analyzer (Rigaku Corporation: miniFlex) using a Cukα ray as an X-ray source. In the TG-DTA, the analysis was performed with a thermogravimetric differential thermal analyzer (NETZSCH Japan K.K.: STA 2500 Regulus) using a standard sample of α-alumina at a temperature increase rate of 5°C/min. These analyses were performed on not only the amorphous iridium oxide powder produced in the present embodiment but also a rutile crystalline iridium oxide powder for comparison. The rutile iridium oxide powder was produced by burning, at 600°C, the amorphous iridium oxide of the present embodiment produced as described above.

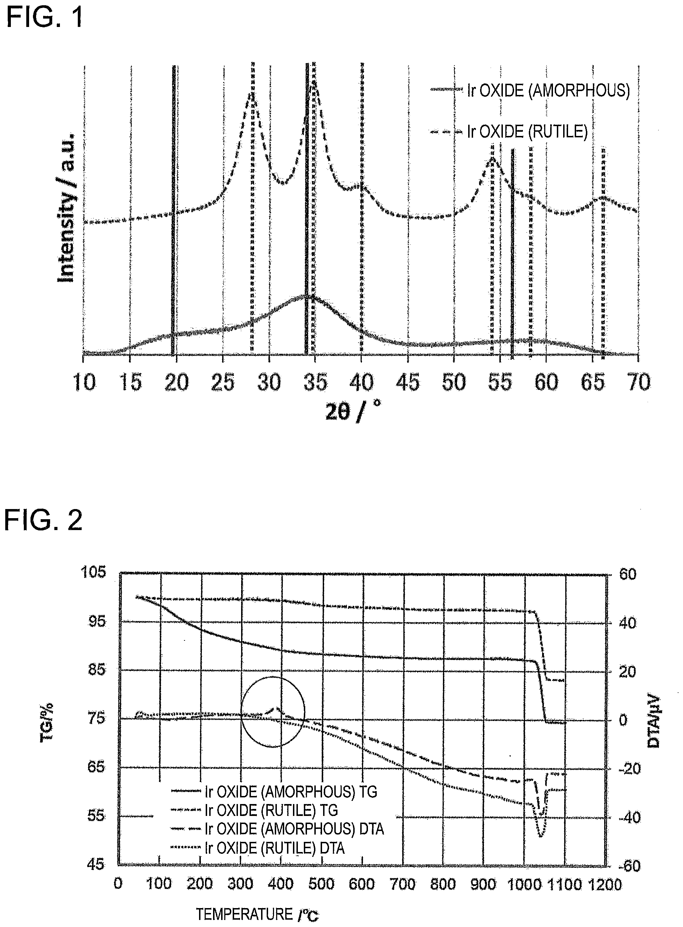

Fig. 1 illustrates an XRD pattern of the amorphous iridium oxide powder produced in the present embodiment. As compared with a diffraction pattern of the crystalline iridium oxide powder, a broad peak was observed in the amorphous iridium oxide powder. It was confirmed that the peak position of the peak is different from a peak position of the crystalline iridium oxide powder.

Fig. 2 illustrates results of the TG-DTA. In a measurement result of the amorphous iridium oxide powder produced in the present embodiment, mass reduction was found in the vicinity of 100°C after the temperature increase of the sample. This mass reduction is probably due to evaporation of crystal water contained in the amorphous iridium oxide powder. The mass reduction caused by the detachment of the crystal water was not observed in the TG curve of the crystalline iridium oxide powder. In the DTA curve of the amorphous iridium oxide powder of the present embodiment, a clear exothermic peak was observed in the vicinity of 350°C. This exothermic peak is probably derived from structural change from the amorphous iridium oxide to crystalline iridium oxide. In this manner, it was confirmed that the amorphous iridium oxide powder indispensably contained in the water electrolysis catalyst of the present invention shows, in the TG-DTA, a definitely different behavior from the crystalline iridium oxide powder.

### [Production of CCM]

Next, a CCM was produced by using the produced amorphous iridium oxide powder as the water electrolysis catalyst (anode electrode membrane). An ink was produced by mixing 2 g of the iridium oxide powder, and 10 g of an ionomer (Nafion dispersion liquid (DE520) manufactured by Aldrich Chemical Company, Inc.). For the mixing, the catalyst and the ionomer were mixed while being ground and stirred with a bead mill (grinding media: 2 mm). The ink was applied onto a polymer electrolyte membrane (Nafion115, dimension: 70 mm x 70 mm) having a thickness of 127 µm. The ink was applied with a spray coater, and Ir application amount and application area were set respectively to 1 mg/cm² and 3.3 cm x 3.3. cm. Besides, on another surface of the polymer electrolyte membrane, a commercially available platinum catalyst ink was applied with a spray coater to form a cathode electrode membrane.

After applying the catalyst inks to be used as the electrode membranes to the both surfaces of the polymer electrolyte membrane, the resultant was pressure-bonded with a hot press device. As pressure-bonding conditions here, pressing/heating was conducted at a temperature of 120°C with a pressing force of 50 kgf/cm² for 30 minutes. In this manner, a CCM having an electrode thickness of about 7 µm, and an electrode area of about 10 cm² was produced. In the present embodiment, the mixing ratio per unit area in the anode electrode membrane between the water electrolysis catalyst and the ionomer was 3:1 in terms of iridium:ionomer. Besides, the mixing ratio per unit area in the cathode electrode membrane between the hydrogen evolution catalyst and the ionomer was 1:1 in terms of platinum:ionomer.

### [Evaluation of CCM]

An electrolysis cell for evaluation was obtained by mounting, as a power supply body, Pt-plated Ti fiber on both the surfaces of the CCM produced as described above. This electrolysis cell was used to perform water electrolysis. As conditions for the water electrolysis, a cell voltage was measured at a current density of 0 to 3.5/cm², and an electrolysis temperature of 50°C. For comparison, a CCM was produced by using the crystalline iridium oxide powder the same as that described above, and employing the same configuration and processes as those of the present embodiment, and the resultant was used to produce an electrolysis cell for measuring a cell voltage.

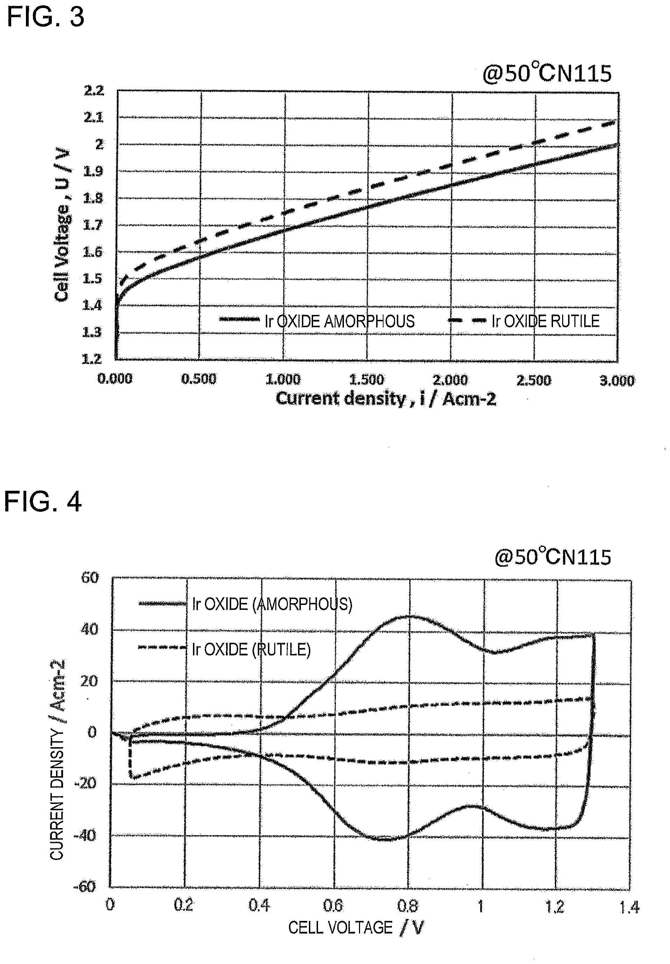

Fig. 3 illustrates results (I-V (cell voltage)) of this electrolysis test. As is understood from Fig. 3, the amorphous iridium oxide powder has an oxygen overvoltage lower than the crystalline iridium oxide powder.

Considering in more detail, a catalyst overvoltage (a sum of an oxygen overvoltage and a hydrogen overvoltage) of a water electrolysis catalyst is calculated by subtracting, from a cell voltage, a theoretical electrolysis voltage of an electrolysis cell and an overvoltage of a resistance component. As for calculated values of catalyst overvoltages at a current density value of 2.0 A/cm² of each electrolysis cell of the present embodiment, the catalyst overvoltage of the amorphous iridium oxide powder (cell voltage: 1.86 V) was 0.39 V, and the catalyst overvoltage of the crystalline iridium oxide powder (cell voltage: 1.93 V) was 0.45 V. In other words, it was confirmed that the voltage was reduced by about 13% in using the amorphous iridium oxide powder as compared with that obtained in using the crystalline iridium oxide powder. Therefore, it was confirmed that the amorphous iridium oxide powder has a suitable water splitting property. In this regard, although a crystalline iridium oxide powder is useful as a water electrolysis catalyst, a catalyst with higher activity can be obtained by applying an amorphous iridium oxide powder. In the calculation of the catalyst overvoltage, the theoretical electrolysis voltage of the electrolysis cell was calculated through calculation based on reaction Gibbs energy or the like at an operating temperature (50°C). Besides, the resistance component was measured as a resistance value during the electrolysis with a low resistance meter (MODEL 356E, manufactured by Tsuruga Electric Corporation, measurement frequency: 10 kHz).

Next, the two types of electrolysis cells produced in the present embodiment were measured for a CV curve to evaluate a charge amount on the respective anodes. The CV curve was measured under conditions of a cell voltage range of +0.05 V to +1.3 V, a sweep rate of 50 mV/sec, a cell temperature of 50°C, and with reference to an RHE. Results are illustrated in Fig. 4. The charge amount corresponds to the area of a positive current in the above-described voltage range. As a result, the charge amount on the electrode obtained by using the amorphous iridium oxide powder was calculated as 6.31 C per iridium-coated unit area (Ir_{1mg}·cm⁻²), and the charge amount on the electrode obtained by using the crystalline iridium oxide powder was calculated as 2.5 C per iridium-coated unit area (Ir_{1mg}·cm⁻²). The charge amount of the amorphous iridium oxide powder was 2.5 times or more of that obtained by using the crystalline iridium oxide powder, and thus, is deemed to enable effective electrolysis. The charge amount on the electrode obtained by using the crystalline iridium oxide powder is also 2.0 C or more per iridium-coated unit area (Ir_{1mg}·cm⁻²) as described above, and therefore, it is presumed that the crystalline iridium oxide powder is also adequate as a water electrolysis catalyst. The water electrolysis catalyst containing the amorphous iridium oxide of the present invention can be a more excellent catalyst than a crystalline iridium oxide powder.

Second Embodiment: In the present embodiment, regarding the configuration of an electrode membrane (CCM) of an anode, a plurality of CCMs were produced with a mixing ratio between a water electrolysis catalyst and an ionomer adjusted. The water electrolysis catalyst used here was the amorphous iridium oxide powder of First Embodiment. The mixing ratio in the electrode membrane was adjusted by adjusting a mixing ratio between the catalyst and the ionomer in the catalyst ink.

Here, four types of CCMs in which the mixing ratio per unit area between the water electrolysis catalyst and the ionomer in the anode electrode membrane was, in terms of iridium:ionomer, 3:2, 2:1, 3:1, and 5:1 were produced. In all the CCMs, the configuration of the cathode electrode membrane was the same as that of First Embodiment (platinum:ionomer = 1:1).

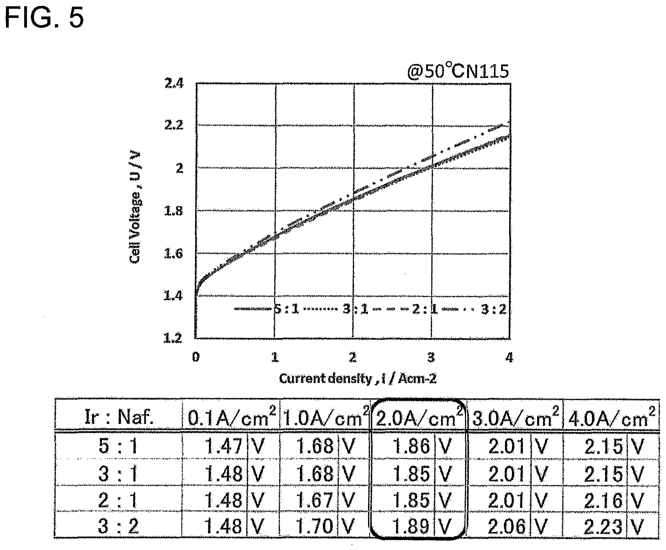

Then, electrolysis cells were produced to perform a water electrolysis test in the same manner as in First Embodiment. Results are illustrated in Fig. 5. In Fig. 5, in comparison of voltage values at a current density value of 2.0 A/cm², voltage values were substantially the same in the electrodes (CCMs) in which the iridium:ionomer was 2:1, 3:1, and 5:1. On the other hand, in the electrode in which the iridium:ionomer was 3:2, an oxygen overvoltage was comparatively higher than those of the former three types of electrodes, and it was thus confirmed that the mixing ratio is preferably in this range. In an actual anode electrode, in consideration of proton conductivity and catalyst cost, it is estimated that the iridium:ionomer is more preferably about 2:1 to 3:1.

Third Embodiment: In the present embodiment, a mixture of an amorphous iridium oxide powder and a crystalline (rutile) iridium oxide powder was applied as the configuration of a water electrolysis catalyst, and a property difference depending on the mixing ratio was examined.

In the present embodiment, the amorphous iridium oxide powder and the crystalline iridium oxide powder the same as those produced in First Embodiment were used, and these were mixed to obtain a water electrolysis catalyst. For the mixing, a ball mill treatment was performed for sufficient mixing. At this point, the proportion of the amorphous iridium oxide powder was set to 100% by mass (amorphous alone), 80% by mass, 60% by mass, 40% by mass, 20% by mass, and 0% by mass (crystalline alone).

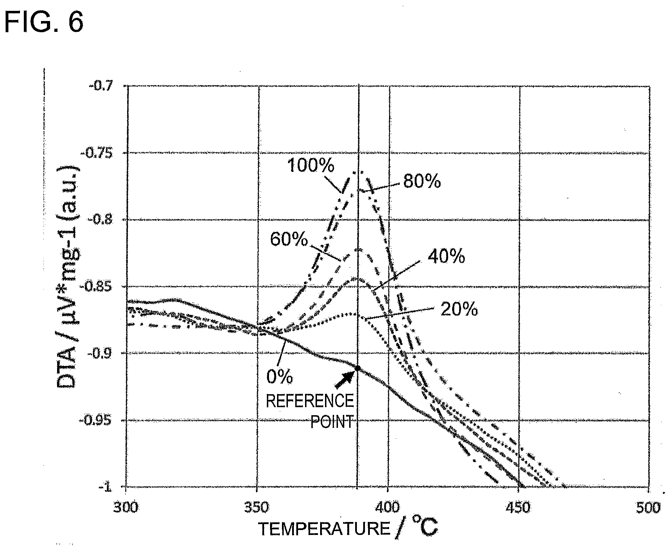

Then, the respective water electrolysis catalysts thus produced were subjected to the TG-DTA. As the results of the analysis, Fig. 6 illustrates a TG-DTA curve at a measurement temperature of 300°C to 500°C.

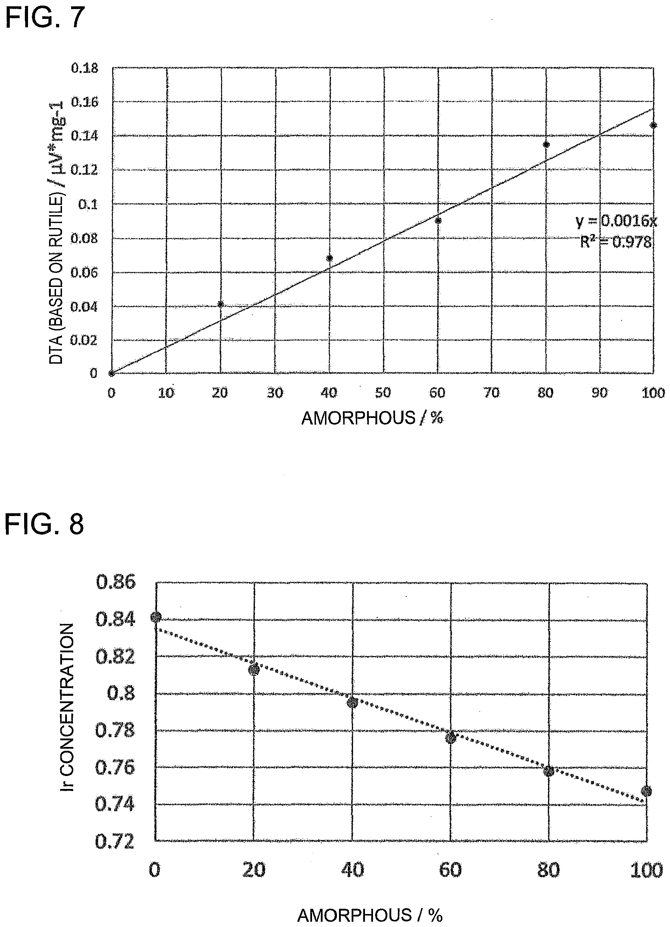

It can be confirmed, based on Fig. 6, that an exothermic peak is exhibited in the vicinity of 389°C in the DTA curve of the water electrolysis catalyst containing the amorphous iridium oxide powder in an amount of 20% by mass or more. It is also understood that the intensity of the exothermic peak increases as the content of the amorphous iridium oxide increases. Here, a calibration curve ("amorphous %" vs. "DTA") obtained, with using a DTA value at 389°C on the DTA curve of the catalyst having the content of amorphous iridium oxide of 0% by mass as a reference point (0 µV/mg), by plotting DTA values at 389°C of the respective catalysts is illustrated in Fig. 7. As is understood from Fig. 7, linear approximation can be applied as the relationship between the proportion of the amorphous iridium oxide in the water electrolysis catalyst and the DTA.

Besides, in the present embodiment, the Ir concentration in each water electrolysis catalyst was analyzed. The analysis of the Ir concentration was performed with an inductively coupled plasma-atomic emission spectrometer (ICP) (SPECTRO Arcos FHS12 manufactured by AMETEK, and iCAP6500 manufactured by Thermo Fisher Scientific). Then, the relationship between the content of amorphous iridium oxide and the Ir concentration (mass concentration) in the catalyst ("amorphous %" vs. "Ir concentration") was examined. Fig. 8 illustrates the results. Similarly to the results of the TG-DTA (Fig. 7), favorable correlation was found between the proportion of the amorphous iridium oxide and the Ir concentration. It is presumed that a calibration curve of the content of amorphous iridium oxide can be obtained by measuring the Ir concentration in the catalyst.

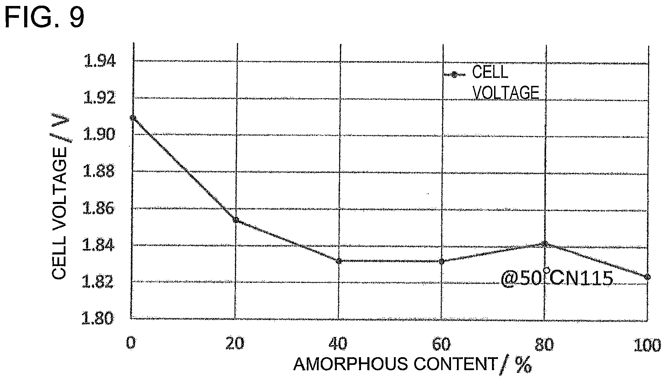

The respective water electrolysis catalysts produced in the present embodiment were used for producing CCMs and electrolysis cells to evaluate the I-V characteristics in the same manner as in First Embodiment. The production conditions and the measurement conditions were the same as those employed in First Embodiment. Measurement results of cell voltages of the electrolysis cells using the respective water electrolysis catalysts are illustrated in Fig. 9.

It is understood, from Fig. 9, that the cell voltage is reduced when amorphous iridium oxide is contained in the iridium oxide powder than when a crystalline iridium oxide powder is singly used. As for the tendency of reduction of the cell voltage, it can be estimated that a suitable water splitting property can be imparted when the content of amorphous iridium oxide is about 15% by mass or more in terms of mass ratio. It was the catalyst containing the amorphous iridium oxide alone (100% by mass) that has the lowest cell voltage, but it is deemed that the water splitting property can be improved without increasing the content that far.

### Industrial Applicability

The present invention provides a water electrolysis catalyst suitable for an anode electrode membrane used in a polymer electrolyte water electrolysis apparatus. An iridium oxide powder of the present invention is excellent in proton conductivity with retaining activity of water electrolysis, and when appropriately mixed with an ionomer, forms an electrode membrane having a reduced oxygen overvoltage and excellent voltage efficiency. The present invention is useful not only for a hydrogen generation device employing polymer electrolyte water electrolysis but also for an alkaline ionized water apparatus or the like.

## Claims

1. A water electrolysis catalyst comprising an iridium oxide powder,
wherein the iridium oxide powder contains an amorphous iridium oxide powder, and
an average particle size of the iridium oxide powder is 0.01 µm or more and 30 µm or less.

2. The water electrolysis catalyst according to claim 1, wherein a proportion of the amorphous iridium oxide powder based on the entire iridium oxide powder is 15% by mass or more in terms of mass ratio.

3. The water electrolysis catalyst according to claim 1 or 2, wherein the catalyst exhibits an exothermic peak in a region of 300°C to 450°C in thermogravimetric differential thermal analysis (TG-DTA).

4. The water electrolysis catalyst according to any one of claims 1 to 3, wherein a Na content is 100 ppm or less, and a Cl content is 100 ppm or less.

5. An electrode membrane for water electrolysis comprising a mixture of the water electrolysis catalyst defined in any one of claims 1 to 4, and an ionomer.

6. The electrode membrane for water electrolysis according to claim 5, wherein a mixing ratio per unit area between the water electrolysis catalyst and the ionomer is, in terms of a ratio between a mass of iridium (mg/cm²) and a mass of the ionomer (mg/cm²), 2:1 or more and 5:1 or less in terms of iridium:ionomer.

7. The electrode membrane for water electrolysis according to claim 5 or 6, wherein a thickness of the electrode membrane for water electrolysis is 2 µm or more and 10 µm or less.

8. A membrane with a catalyst layer, comprising the electrode membrane for water electrolysis defined in any one of claims 5 to 7 as an anode, and comprising an electrode membrane containing a hydrogen generation catalyst as a cathode,
wherein the electrode membrane for water electrolysis of the anode has an electric capacity per iridium-coated unit area (Ir_{1mg}·cm⁻²) of 0.50 C or more.
